# EUROPEAN PATENT APPLICATION

(11) **EP 3 127 816 A1**
(43) Date of publication of application: **08.02.2017**
(21) Application number: 16178301.4
(22) Date of filing: 07.07.2016
(51) Int. Cl.: B64D 41/00, F02C 7/32

(54) **AUXILIARY POWER UNIT ASSEMBLY AND A METHOD OF USING THE SAME**

(30) Priority: 07.08.2015 GB 201513951
(71) Applicant: Rolls-Royce plc, London SW1E 6AT (GB)
(72) Inventor: Stieger, Rory, Derby, Derbyshire DE24 8BJ (GB); Razak, Ahmad, Derby, Derbyshire DE24 8BJ (GB)
(74) Representative: Rolls-Royce plc

(57) **Abstract**

A gas turbine auxiliary power unit system (100:200:300:400:500) for an aircraft comprises an aircraft cabin (110) provided with a pressurised air supply (116), a gas turbine engine (120:220:320:420:520) comprising a compressor assembly (122:222:322:422:522), and a controller (130:230:330:430:530).

The pressurised air supply (116) is provided to the aircraft cabin (110) through an aircraft cabin air inlet (112), and exhausted from the aircraft cabin (110) through an aircraft cabin air exhaust (114), while the gas turbine engine (120:220:320:420:520) is provided with an inlet air flow (124) from the aircraft cabin air exhaust (114).

The controller (130:230:330:430:530) is operable to control a flow rate of a fuel supplied to the gas turbine engine (120:220:320:420:520) responsive to a power demand on the auxiliary power unit (100:200:300:400:500), and also to restrict an inlet air flow into the gas turbine engine (120:220:320:420:520), so as to maintain an air pressure inside the aircraft cabin (110) within a pre-determined range.

## Description

### Field of the Disclosure

The present disclosure relates to a gas turbine auxiliary power unit assembly and particularly, but not exclusively, to a gas turbine auxiliary power unit assembly for an aircraft.

### Background to the Disclosure

It is well known for large and medium aircraft to have an auxiliary power unit (APU) mounted in the tail of the aircraft. This APU is typically used for providing electrical power and pneumatic power for environmental control systems (ECS) while the aircraft is on the ground, and also for providing pneumatic power for the starting of the main engines.

Conventionally, this APU is a simple cycle gas turbine having a high power density but a relatively poor operational efficiency. This limited efficiency results from the limited practical overall pressure ratio (OPR) that is practically achievable for small size gas turbine engines. In this context, the OPR is defined as the ratio of the stagnation pressure at the front and rear of the compressor of the engine

In some cases it is necessary to operate the APU whilst the aircraft is in flight, for example to provide backup electrical power if one of the electrical generators of the main engines becomes inoperable.

Alternatively, the APU may be required to operate in flight to undertake extended range twin operations (ETOPS) flights to supplement the output of the electrical generators installed on the aircraft.

The air intake for the APU is typically a retractable scoop on the rear fuselage of the aircraft. This intake produces a significant impediment to flow over the aircraft's exterior with a concomitant increase in aircraft drag in flight.

The cabin of the aircraft is provided with an ECS that is supplied with air either by taking an air bleed from the engine(s) or alternatively by compressing atmospheric air using a dedicated compressor. The ECS then uses a combination of heat transfer, compression and expansion devices to effect regulation of the temperature of the air that is then supplied to the aircraft cabin. The pressure of the cabin air supply is controlled by controlling the area of a cabin exhaust nozzle. Cabin pressure and cabin temperature may thus be maintained at a level that is comfortable for the aircraft's occupants.

A disadvantage of this conventional APU system is that the gas turbine engine powering the APU is fed by atmospheric air, and therefore suffers a significant power reduction with altitude because of the decrease in air density with altitude.

### Statements of Disclosure

According to a first aspect of the present disclosure there is provided a gas turbine auxiliary power unit system for an aircraft, the system comprising:
an aircraft cabin provided with a pressurised air supply;
a gas turbine engine comprising a compressor assembly; and
a controller,
wherein the pressurised air supply is provided to the aircraft cabin through an aircraft cabin air inlet, and exhausted from the aircraft cabin through an aircraft cabin air exhaust,
the gas turbine engine is provided with an inlet air flow from the aircraft cabin air exhaust, and
the controller is operable to control a flow rate of a fuel supplied to the gas turbine engine responsive to a power demand on the auxiliary power unit, the controller being further operable to restrict an inlet air flow into the gas turbine engine so as to maintain an air pressure inside the aircraft cabin within a pre-determined range.

Supplying the APU with pressurised air that is being exhausted from the aircraft cabin reduces the power lapse rate with altitude. This allows the APU to be sized for ground operation and still be capable of satisfying the power demands of the aircraft at altitude. This in turn allows the APU of the disclosure to be smaller and lighter than a conventional APU.

Supplying the gas turbine engine reduces the inlet temperature. This results in the auxiliary power unit system having an increased temperature ratio that in turn leads to the APU system having a higher efficiency. This makes the APU more cost-effective for a user.

By restricting the inlet air flow to the gas turbine engine in conjunction with the conventional control of fuel flow rate to the engine, the system can be regulated to deliver a target power level with an air flow below that supplied to the aircraft cabin by the ECS.

Supplying the APU with air boosted by the main engines and the ECS
- increases the apparent thermal efficiency of the APU;
- retains the power delivered by the APU dependent on the controlled cabin pressure rather than the much lower atmospheric pressure at altitude.

It is necessary to maintain the air pressure inside the aircraft cabin within a pre-determined range in order to ensure that the cabin environment remains comfortable for the aircraft passengers.

Optionally, the gas turbine engine comprises a plurality of actuatable variable inlet guide vanes, each of the variable inlet guide vanes being controlled by the controller to restrict the inlet air flow into the gas turbine engine.

Optionally, the compressor assembly comprises the plurality of variable inlet guide vanes.

The variable area power turbine nozzle controls the air mass flow through the APU and limits it to a level below that supplied to the aircraft cabin by the ECS.

A controller controls the APU power turbine area in collaboration with the cabin exhaust valve and the fuel flow to the APU combustor to effect control of the cabin pressure, and also the power generated on the APU free power turbine which drives an electrical generator (and potentially other loads such as a load compressor).

By controlling the area of the variable area power turbine in conjunction with the area of the cabin exhaust valve, the pressure in the cabin can be controlled independently of the power demand of the APU.

Optionally, the gas turbine engine further comprises:
a coupled power turbine assembly, the coupled power turbine assembly being connected to the compressor assembly by a first shaft; and
a throttle assembly in fluid communication with the compressor assembly;
wherein the controller is operable to control the throttle assembly to restrict the inlet air flow into the gas turbine engine.

Alternatively, or additionally, the restriction of the inlet air flow into the gas turbine engine may be effected by the use of a throttle assembly positioned within the inlet air flow path.

Optionally, the system further comprises a first electrical generator, the first electrical generator being coupled to the first shaft, and
wherein the controller is operable to control an electrical power load on the first electrical generator to thereby restrict the inlet air flow into the gas turbine engine.

The application of an electrical load to an electrical generator that is driven by the engine shaft enables the rotational speed of the engine to be controlled. This control of engine speed in turn allows for the air flow through the engine to be controlled.

Optionally, the system further comprises a second electrical generator, the gas turbine engine further comprises a free power turbine assembly, a first shaft and a second shaft,
the free power turbine assembly being in fluid communication with the coupled power turbine assembly,
the first shaft connects the compressor assembly to the coupled power turbine assembly,
the second shaft connects the free power turbine to the second electrical generator, and
the controller is further operable to control an electrical power load on the second electrical generator to thereby restrict the inlet air flow into the gas turbine engine.

In an alternative arrangement, the gas turbine engine has a two shaft configuration. By extracting power from the second shaft (the gas generator shaft), the speed of the second shaft may be reduced which would in turn reduce the air flow through the core of the engine.

This power extraction may be done with a direct drive shaft or with a drive of an electrical machine either embedded on the shaft or through a drive arrangement. This arrangement may require separate electrical machines for each of the shafts.

Optionally, the system further comprises a third electrical generator, the third electrical generator being coupled to the first shaft, and wherein the controller is further operable to control the electrical power load on the third electrical generator to thereby restrict the inlet air flow into the gas turbine engine.

In one arrangement, the gas turbine has a two shaft configuration with separate loads applied to each of the shafts, and these separate loads are controlled in collaboration with the fuel flow and cabin exhaust valve to achieve a pre-determined desired cabin pressure, together with an air flow through APU below that supplied to the cabin by the ECS.

Optionally, the system further comprises a fourth electrical generator, a first continuously variable transmission assembly, a second continuously variable transmission assembly, and a differential gearbox,
the gas turbine engine further comprises a second shaft,
the free power turbine assembly being in fluid communication with the coupled power turbine assembly,
the first shaft connecting the compressor assembly to the coupled power turbine assembly, and to the first continuously variable transmission assembly, the second shaft connecting the free power turbine assembly to the second continuously variable transmission assembly, the differential gearbox having a first input, a second input, and an output, the first continuously variable transmission assembly being connected to the first input, the second continuously variable transmission assembly being connected to the second input, and the fourth electrical generator being connected to the output,
the controller being further operable to control an electrical power load on the fourth electrical generator, the first continuously variable transmission assembly and the second continuously variable transmission assembly to thereby restrict the inlet air flow into the gas turbine engine.

In another arrangement, the system is provided with two continuously variable transmissions (such as, for example, Torotrack™, Nissan Extroid™ or KHI CVT drives) together with a differential gear box to determine the portion of each shaft power that is supplied to the load. In this arrangement, the load is provided by an electric generator. In other arrangements, the load may alternatively be provided by, for example, a load compressor.

The pair of continuously variable transmissions may be used to select the fraction of power from each of two input shafts that is transmitted to a single electrical machine. Thus by controlling the relative power extraction from the gas generator shaft and the power turbine shaft, the mass flow through the engine can be controlled. Controlling the relative power extraction between gas generator shaft and power turbine shaft in conjunction with the cabin exhaust valve, the cabin pressure can be controlled.

Optionally, the gas turbine engine is a recuperated gas turbine engine.

Recuperating the gas turbine engine of the APU increases the thermal efficiency of the APU making the system more efficient and cost effective for a user.

According to a second aspect of the present disclosure there is provided a method of using a gas turbine auxiliary power unit system, the system comprising an aircraft cabin provided with a pressurised air supply, a gas turbine engine, and a controller, the method comprising the steps of: exhausting the pressurised air supply from the aircraft cabin through an aircraft cabin air exhaust;
providing the gas turbine engine with an inlet air flow from the aircraft cabin air exhaust; and
restricting the inlet air flow into the gas turbine engine so as to maintain an air pressure inside the aircraft cabin within a pre-determined range.

The use of cabin exhaust air to supply the gas turbine engine improves the efficiency of the gas turbine engine and allows the APU to be sized for ground operation and still meet the requirements at altitude. This enables the gas turbine to be smaller, lighter and more cost effective than conventional APU systems.

Optionally, the gas turbine engine further comprising a plurality of actuatable variable inlet guide vanes, and wherein the step of:
restricting the inlet air flow into the gas turbine engine so as to maintain an air pressure inside the aircraft cabin above a pre-determined minimum value,
comprises the step of:
actuating the variable inlet guide vanes to restrict the inlet air flow into the gas turbine engine to maintain an air pressure inside the aircraft cabin within a pre-determined range.

The use of variable inlet guide vanes provides a simple and efficient technique for restricting the inlet air flow through the gas turbine engine.

Optionally, the system further comprises a first electrical generator, and the step of:
restricting the inlet air flow into the gas turbine engine so as to maintain an air pressure inside the aircraft cabin above a pre-determined minimum value,
comprises the step of:
controlling the electrical power load on the first electrical generator, to restrict the inlet air flow into the gas turbine engine to maintain an air pressure inside the aircraft cabin within a pre-determined range.

The application of an electrical load to the electrical generator provides a technique for reducing the rotational speed of the engine and hence restricting the inlet air flow into the gas turbine engine.

Optionally, the system further comprises a second electrical generator, and the step of:
controlling the electrical power load on the first electrical generator, to restrict the inlet air flow into the gas turbine engine to maintain an air pressure inside the aircraft cabin within a pre-determined range,
comprises the step of:
controlling the electrical power load on the first electrical generator, and the electrical power load on the second electrical generator, to restrict the inlet air flow into the gas turbine engine maintain an air pressure inside the aircraft cabin within a pre-determined range.

According to a third aspect of the present disclosure there is provided an aircraft comprising a gas turbine auxiliary power unit system according to the first aspect of the disclosure.

Other aspects of the disclosure provide devices, methods and systems which include and/or implement some or all of the actions described herein. The illustrative aspects of the disclosure are designed to solve one or more of the problems herein described and/or one or more other problems not discussed.

### Brief Description of the Drawings

There now follows a description of an embodiment of the disclosure, by way of nonlimiting example, with reference being made to the accompanying drawings in which:
Figure 1 shows a schematic arrangement of an auxiliary power unit system according to a first embodiment of the disclosure;
Figure 2 shows a schematic arrangement of an auxiliary power unit system according to a second embodiment of the disclosure;
Figure 3 shows a schematic arrangement of an auxiliary power unit system according to a third embodiment of the disclosure;
Figure 4 shows a schematic arrangement of the system of Figure 3 with the addition of a recuperator;
Figure 5 shows a schematic arrangement of an auxiliary power unit system according to a fourth embodiment of the disclosure;
Figure 6 shows a schematic arrangement of an auxiliary power unit system according to a fifth embodiment of the disclosure; and
Figure 7 shows a plot of power generated by the system of the disclosure.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

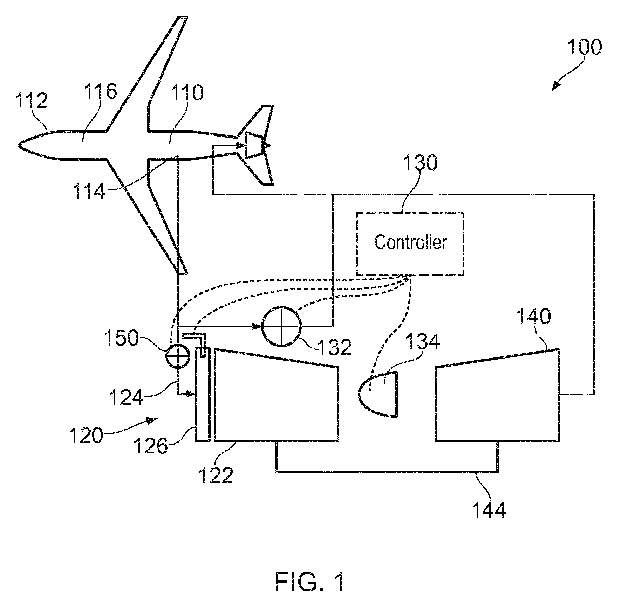

Referring to Figure 1, a gas turbine auxiliary power unit system for an aircraft according to a first embodiment of the disclosure is designated generally by the reference numeral 100. The auxiliary power unit system 100 of the disclosure is described in relation to a passenger aircraft application. However, it is to be understood that the system 100 of the disclosure may equally be applied to other classes of aircraft (freight aircraft, military aircraft, etc.).

The system 100 comprises an aircraft cabin 110, a gas turbine engine 120, and a controller 130.

The aircraft cabin 110 is provided with a pressurised air supply 116. This pressurised air supply 116 is fed into the aircraft cabin 110 through an aircraft cabin air inlet 112, and is exhausted from the cabin through an aircraft cabin air exhaust 114.

The gas turbine engine 120 is provided with an inlet air flow 124 that is taken from the aircraft cabin air exhaust flow 114. The inlet air flow 124 is regulated by a throttle assembly 150.

A bypass valve 132 is provided upstream of the throttle assembly 150 to enable an excess of aircraft cabin air exhaust flow to be routed directly out of the aircraft cabin 110, in other words, to bypass the gas turbine engine 110.

In one arrangement of the disclosure the throttle assembly 150 is a butterfly valve actuated by a stepper motor. In other arrangements, the throttle assembly 150 may take the form of an alternative air flow regulating mechanism.

The gas turbine engine 120 comprises a compressor assembly 122, a combustor assembly 134, and a coupled power turbine assembly 140. The compressor assembly 122 and the coupled power turbine assembly 140 are connected to one another by a first shaft 144.

The first shaft 144 may then be connected to other equipment (not shown), such as a load compressor, an electrical generator, or similar.

The compressor assembly 122 comprises a plurality of variable inlet guide vanes 126 that may be used to regulate an air flow through the compressor assembly 122. The detail of such variable inlet guide vanes 126 and their operation are well known in the field of gas turbine engine design and operation, and so are not described further here.

The controller 130 is arranged to control the quantity of fuel supplied to the combustor assembly 134, the operation of the bypass valve 132, the operation of the variable inlet guide vanes 126, and the operation of the throttle assembly 150.

In use, the controller 130 provides control signals to each of the combustor, bypass valve, variable inlet guide vanes and throttle assembly in response to a demand signal (not shown) from, for example, the aircraft control system (not shown).

The controller 130 operates generally to control the speed and power output from the gas turbine engine 120 in the same manner as a conventional gas turbine engine controller.

However, the controller 130 regulates the operation of the gas turbine engine 120 to ensure that the inlet air flow 124 is restricted so as to maintain an air pressure inside the aircraft cabin 110 within a pre-determined range. This pre-determined range is set to a value that ensures that the occupants of the aircraft cabin can remain comfortable. Typically, the air pressure inside the aircraft cabin 110 is maintained at a value equivalent to a 6000-8000 ft (1850-2500 m) altitude, for example, within the range of 0.79bar to 0.75bar.

The restriction of the inlet air flow 124 is effected by regulating one or more of the throttle assembly 150, the variable inlet guide vanes 126 and the bypass valve 132.

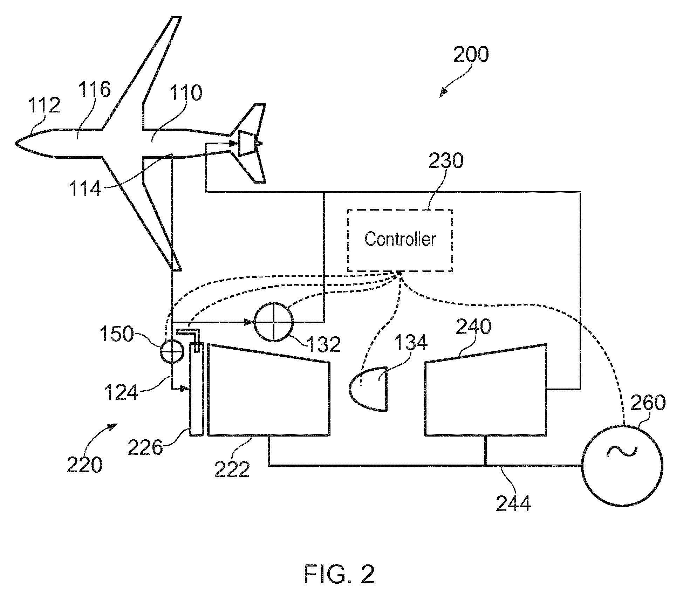

Referring to Figure 2, a system according to a second embodiment of the disclosure is designated generally by the reference numeral 200. Features of the system 200 which correspond to those of system 100 have been given corresponding reference numerals for ease of reference.

The system 200 comprises an aircraft cabin 110, a gas turbine engine 220, and a controller 230.

The gas turbine engine 220 comprises a compressor assembly 222, a combustor assembly 134, and a coupled power turbine assembly 240. The compressor assembly 222 and the coupled power turbine assembly 240 are connected to one another by a first shaft 244.

The first shaft 244 is then connected to a first electrical generator 260. The controller 230 further provides a control signal to the first electrical generator 260 to regulate the electrical load demanded from the first electrical generator 260.

Operation of the system 200 is generally similar to that of the system 100 with the addition of the control of the electrical load on the first electrical generator 260. The electrical load on the first electrical generator 260 may be varied as a further means of regulating the rotational speed of the gas turbine engine 220 and hence the inlet air flow 124 into the engine 220.

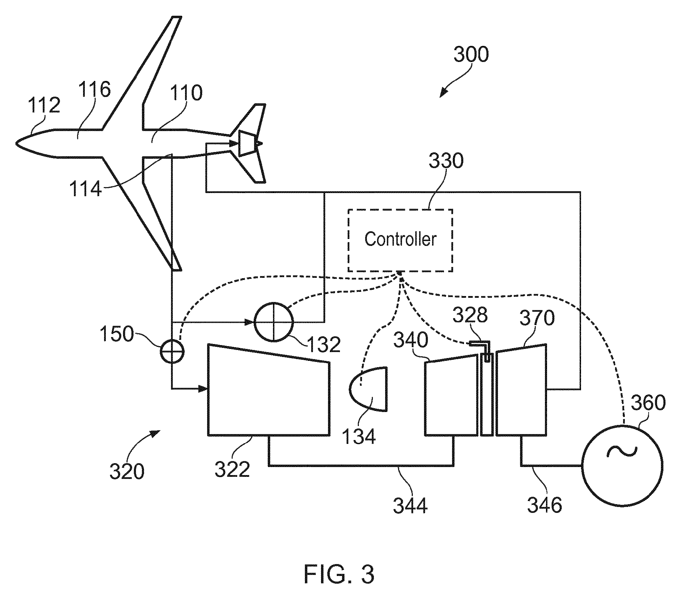

Referring to Figure 3, a system according to a third embodiment of the disclosure is designated generally by the reference numeral 300. Features of the system 300 which correspond to those of system 100 have been given corresponding reference numerals for ease of reference.

The system 300 comprises an aircraft cabin 110, a gas turbine engine 320, and a controller 330.

The gas turbine engine 320 comprises a compressor assembly 322, a combustor assembly 134, a coupled power turbine assembly 340, and a free power turbine assembly 370. The compressor assembly 322 and the coupled power turbine assembly 340 are connected to one another by a first shaft 344.

The free power turbine assembly 370 is then connected to a second electrical generator 362. The controller 330 further provides a control signal to the second electrical generator 362 to regulate the electrical load demanded from the second electrical generator 362.

Operation of the system 300 is generally similar to that of the system 200 with the control of the electrical load on the second electrical generator 362 replacing the control of the electrical load on the first electrical generator 260. The electrical load on the second electrical generator 362 may be varied as a further means of regulating the rotational speed of the gas turbine engine 320 and hence the inlet air flow 124 into the engine 320.

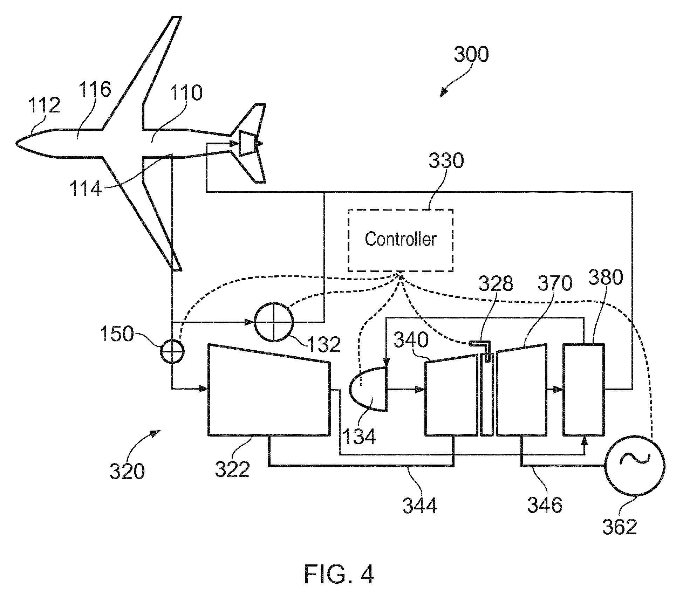

Figure 4 shows the system 300 of Figure 3 with the addition of a recuperator 380 that is positioned in the exhaust gas flow path. The recuperator 380 is a heat exchanger that transfers heat from the exhaust gas flow to that of the inlet air flow. The use of a recuperator 380 improves the thermal efficiency of the gas turbine engine 320.

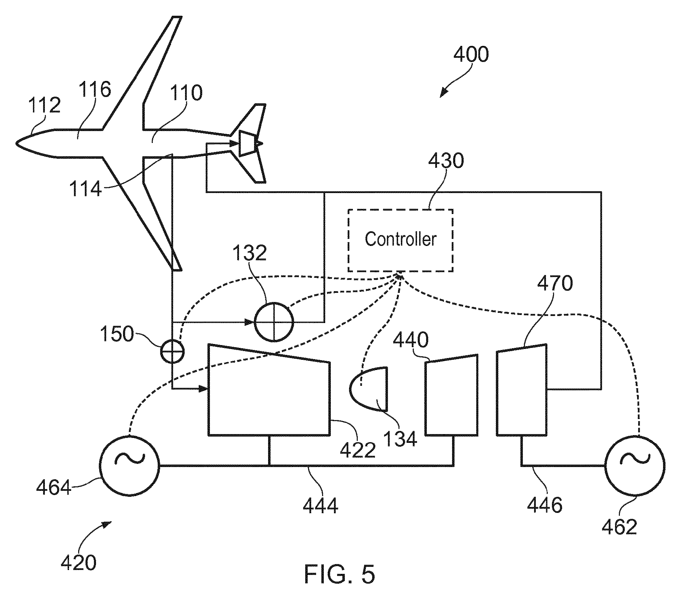

Referring to Figure 5, a system according to a fourth embodiment of the disclosure is designated generally by the reference numeral 400. Features of the system 400 which correspond to those of system 100 have been given corresponding reference numerals for ease of reference.

The system 400 comprises an aircraft cabin 110, a gas turbine engine 420, and a controller 430.

The gas turbine engine 420 comprises a compressor assembly 422, a combustor assembly 134, a coupled power turbine assembly 440, and a free power turbine assembly 470. The compressor assembly 422 and the coupled power turbine assembly 440 are connected to one another by a first shaft 444.

The free power turbine assembly 470 is then connected to a second electrical generator 462. The compressor assembly 422 and the coupled power turbine assembly 440 are connected to a third electrical generator 464. The controller 430 provides a control signal to the second electrical generator 462 to regulate the electrical load demanded from the second electrical generator 462, and to the third electrical generator 464 to regulate the electrical load demanded from the third electrical generator 464.

Operation of the system 400 is generally similar to that of the system 300. The electrical load on the second electrical generator 362, together with the electrical load on the third electrical generator 464 may each be varied independently as a means of regulating the rotational speed of the gas turbine engine 420 and hence the inlet air flow 124 into the engine 420.

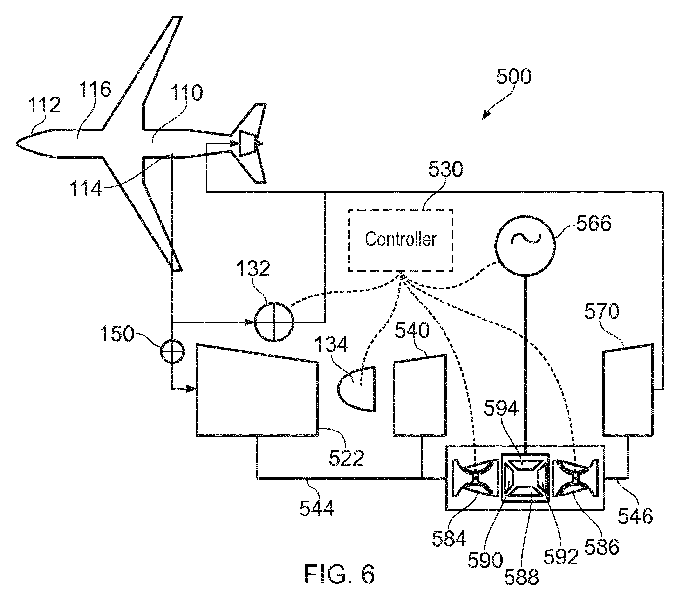

Referring to Figure 6, a system according to a fifth embodiment of the disclosure is designated generally by the reference numeral 500. Features of the system 500 which correspond to those of system 100 have been given corresponding reference numerals for ease of reference.

The system 500 comprises an aircraft cabin 110, a gas turbine engine 520, and a controller 530.

The gas turbine engine 520 comprises a compressor assembly 522, a combustor assembly 134, a coupled power turbine assembly 540, and a free power turbine assembly 570. The compressor assembly 522 and the coupled power turbine assembly 540 are connected to one another by a first shaft 544. The free power turbine assembly 570 is connected to a second shaft 546.electrical generator 462.

The first shaft 544 is connected to a first continuously variable transmission assembly 584. The second shaft 546 is connected to a second continuously variable transmission assembly 586.

The first continuously variable transmission assembly 584 is further connected to a first input 590 to a differential gearbox 588. The second continuously variable transmission assembly 586 is further connected to a second input 592 to a differential gearbox 588. An output 594 from the differential gearbox 588 is connected to a fourth electrical generator 566.

The controller 530 provides a control signal to each of the first continuously variable transmission assembly 584, the second continuously variable transmission assembly 586, the differential gearbox 588, and the fourth electrical generator 566, to regulate the electrical load demanded from the fourth electrical generator 566.

Operation of the system 500 is generally similar to that of the system 300. The electrical load on the fourth electrical generator 566 may be varied as a means of regulating the rotational speed of the gas turbine engine 520 and hence the inlet air flow 124 into the engine 520.

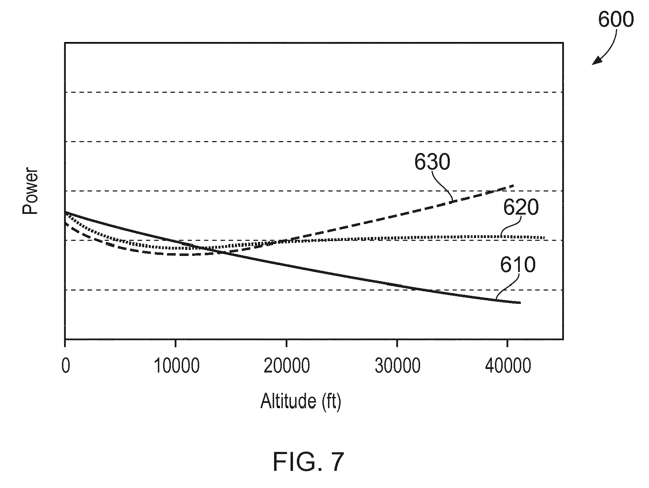

As indicated in Figure 7, the method and apparatus of the present disclosure enables the auxiliary power unit system of the present disclosure to provide a significant power increase over a conventional auxiliary power unit system, when operating at altitude.

A typical variation in power output with altitude for a conventional auxiliary power unit is shown by the curve 610. The curve 610 clearly shows the reduction in power produced by the conventional auxiliary power unit as the altitude increases.

Operation of the APU with air supplied from the aircraft cabin 110 results in increased power output from the APU as indicated by the curve 630. However, such a system will consume more air than can be supplied from the aircraft cabin 110 if the air pressure inside the aircraft cabin 110 is to be maintained within a predetermined range.

In contrast, a typical variation in power output with altitude for the auxiliary power unit system of the present disclosure is shown by the curve 620. In this arrangement, the mass flow through the APU is controlled to match that of the ECS supply and the power available is thus limited by air mass flow available to the APU while maintaining the air pressure inside the aircraft cabin 110 within a predetermined range.

The foregoing description of various aspects of the disclosure has been presented for purposes of illustration and description. It is not intended to be exhaustive or to limit the disclosure to the precise form disclosed, and obviously, many modifications and variations are possible. Such modifications and variations that may be apparent to a person of skill in the art are included within the scope of the disclosure as defined by the accompanying claims.

## Claims

1. A gas turbine auxiliary power unit system (100:200:300:400:500) for an aircraft, the system comprising:
an aircraft cabin (110) provided with a pressurised air supply (116);
a gas turbine engine (120:220:320:420:520) comprising a compressor assembly (122:222:322:422:522); and
a controller (130:230:330:430:530),
wherein the pressurised air supply (116) is provided to the aircraft cabin (110) through an aircraft cabin air inlet (112), and exhausted from the aircraft cabin (110) through an aircraft cabin air exhaust (114),
the gas turbine engine (120:220:320:420:530) is provided with an inlet air flow (124) from the aircraft cabin air exhaust (114), and
the controller (130:230:330:430:530) is operable to control a flow rate of a fuel supplied to the gas turbine engine (120:220:320:420:520) responsive to a power demand on the auxiliary power unit (100:200:300:400:500), the controller (130:230:330:430:530) being further operable to restrict an inlet air flow (124) into the gas turbine engine (120:220:320:420:520), so as to maintain an air pressure inside the aircraft cabin (110) within a pre-determined range.

2. The system (100:200:300:400:500) as claimed in Claim 1, wherein the gas turbine engine (120:220:320:420:520) comprises a plurality of actuatable variable inlet guide vanes (126), each of the variable inlet guide vanes (126) being controlled by the controller (130:230:330:430:530) to restrict the inlet air flow (124) into the gas turbine engine (120:220:320:420:520).

3. The system (100:200:300:400:500) as claimed in Claim 2, wherein the compressor assembly (122:222:322) comprises the plurality of variable inlet guide vanes (126).

4. The system (100:200:300:400:500) as claimed in any one of Claims 1 to 3, wherein the gas turbine engine (120:220:320:420:520) further comprises:
a coupled power turbine assembly (140:240:340:440:540), the coupled power turbine assembly (140:240:340:440:540) being connected to the compressor assembly (122:222:322:422:522) by a first shaft (144:244:344:444:544); and
a throttle assembly (150) in fluid communication with the compressor assembly (122:222:322:422:522);
wherein the controller (130:230:330:430:530) is operable to control the throttle assembly (150) to restrict the inlet air flow (124) into the gas turbine engine (120:220:320:420:520).

5. The system (200) as claimed in Claim 4, the system (200) further comprising a first electrical generator (260), the first electrical generator (260) being coupled to the first shaft (244), and
wherein the controller (230) is operable to control an electrical power load on the first electrical generator (260) to thereby restrict the inlet air flow (124) into the gas turbine engine (220).

6. The system (300:400) as claimed in Claim 4, wherein the system (300:400) further comprises a second electrical generator (362:462), the gas turbine engine (320:420) further comprises a free power turbine assembly (370:470), a first shaft (344:444) and a second shaft (346:446),
the free power turbine assembly (370:470) being in fluid communication with the coupled power turbine assembly (340:440),
the first shaft (344:444) connects the compressor assembly (322:422) to the coupled power turbine assembly (340:440),
the second shaft (346) connects the free power turbine assembly (370:470) to the second electrical generator (362:462), and
the controller (330:430) is further operable to control an electrical power load on the second electrical generator (362:462) to thereby restrict the inlet air flow (124) into the gas turbine engine (320:420).

7. The system (400) as claimed in Claim 6, the system (400) further comprising a third electrical generator (464), the third electrical generator (464) being coupled to the first shaft (444), and wherein the controller (430) is further operable to control the electrical power load on the third electrical generator (464) to thereby restrict the inlet air flow (124) into the gas turbine engine (420).

8. The system (500) as claimed in Claim 4, the system (500) further comprising a fourth electrical generator (566), a first continuously variable transmission assembly (584), a second continuously variable transmission assembly (586), and a differential gearbox (588),
the gas turbine engine (520) further comprises a second shaft (546),
the free power turbine assembly (570) being in fluid communication with the coupled power turbine assembly (540),
the first shaft (544) connecting the compressor assembly (522) to the coupled power turbine assembly (540), and to the first continuously variable transmission assembly (584), the second shaft (546) connecting the free power turbine assembly (570) to the second continuously variable transmission assembly (586), the differential gearbox (588) having a first input (590), a second input (592), and an output (594), the first continuously variable transmission assembly (584) being connected to the first input (590), the second continuously variable transmission assembly (586) being connected to the second input (592), and the fourth electrical generator (566) being connected to the output (594),
the controller (530) being further operable to control an electrical power load on the fourth electrical generator (362)566, the first continuously variable transmission assembly (584) and the second continuously variable transmission assembly (586) to thereby restrict the inlet air flow (124) into the gas turbine engine (520).

9. The system (100:200:300:400:500) as claimed in any one of Claims 1 to 8, wherein the gas turbine engine (120:220:320:420:520) is a recuperated gas turbine engine.

10. A method of using a gas turbine auxiliary power unit system (100:200:300), the system (100:200:300) comprising an aircraft cabin (110) provided with a pressurised air supply (116), a gas turbine engine (120:220:320), and a controller (130:230:330), the method comprising the steps of:
exhausting the pressurised air supply (116) from the aircraft cabin (110) through an aircraft cabin air exhaust (114);
providing the gas turbine engine (120:220:320) with an inlet air flow (124) from the aircraft cabin air exhaust (114);
controlling the fuel flow rate to the gas turbine engine (120:220:320) to meet a power demand on the auxiliary power unit (100:200:300); and
restricting the inlet air flow (124) into the gas turbine engine (120:220:320) so as to maintain an air pressure inside the aircraft cabin (110) within a pre-determined range.

11. The method as claimed in Claim 10, the gas turbine engine (100:200:300) further comprising a plurality of actuatable variable inlet guide vanes (126), and wherein the step of:
restricting the inlet air flow (124) into the gas turbine engine (120:220:320) so as to maintain an air pressure inside the aircraft cabin (110) above a pre-determined minimum value,
comprises the step of:
actuating the variable inlet guide vanes (126) to restrict the inlet air flow (124) into the gas turbine engine (120:220:320) so as to maintain an air pressure inside the aircraft cabin (110) within a pre-determined range.

12. The method as claimed in Claim 10, the system (200:300) further comprising a first electrical generator (260), and wherein the step of:
restricting the inlet air flow (124) into the gas turbine engine (220:320) so as to maintain an air pressure inside the aircraft cabin (110) within a pre-determined range,
comprises the step of:
controlling the electrical power load on the first electrical generator (260), to restrict the inlet air flow (124) into the gas turbine engine (220:320) so as to maintain an air pressure inside the aircraft cabin (110) within a pre-determined range.

13. The method as claimed in Claim 12, the system (300) further comprising a second electrical generator (362), and wherein the step of:
controlling the electrical power load on the first electrical generator (260), to restrict the inlet air flow (124) into the gas turbine engine (320) so as to maintain an air pressure inside the aircraft cabin (110) within a pre-determined range, comprises the step of:
controlling the electrical power load on the first electrical generator (260), and the electrical power load on the second electrical generator (362), to restrict the inlet air flow (124) into the gas turbine engine so as to maintain an air pressure inside the aircraft cabin (110) within a pre-determined range.

14. An aircraft comprising a gas turbine auxiliary power unit system as claimed in any one of Claims 1 to 9.
